# DEMANDE DE BREVET EUROPEEN

(11) **EP 2 228 271 A1**
(43) Date de publication de la demande: **15.09.2010**
(21) Numéro de dépôt: 10001749.0
(22) Date de dépôt: 22.02.2010
(51) Int. Cl.: B60S 1/38, B60S 1/52

(54) **Dispositif d'essuyage à projection de liquide de nettoyage par le balai d'essuie-glace**

(30) Priorité: 13.03.2009 FR 0901161
(71) Demandeur: Valeo Systemes D'Essuyage, 78321 La Verriere (FR)
(72) Inventeur: Cerdan, Jérôme, 63570 Beaulieu (FR)
(74) Mandataire: Rosolen-Delarue, Katell

(57) **Abrégé**

Ce dispositif d'essuyage (10) comporte un balai d'essuie-glace (12) muni d'au moins un conduit (32) de distribution et de projection de liquide de nettoyage par le balai d'essuie-glace, un bras d'entraînement (22) apte à entraîner ce balai d'essuie-glace (12) sur une vitre ou un pare-brise et comportant au moins un dispositif (34) d'alimentation en liquide de nettoyage, et des moyens (38, 40) de raccordement du dispositif d'alimentation (34) au conduit (32) de distribution et de projection de liquide de nettoyage.

Ces moyens de raccordement (38, 40) comportent des éléments (42, 44) de raccordement magnétique.

## Description

La présente invention concerne un dispositif d'essuyage à projection de liquide de nettoyage par le balai d'essuie-glace.

Plus précisément l'invention concerne un dispositif d'essuyage comportant un balai d'essuie-glace muni d'au moins un conduit de distribution et de projection de liquide de nettoyage par le balai d'essuie-glace, un bras d'entraînement apte à entraîner ce balai d'essuie-glace sur une surface vitrée (par exemple, vitre ou pare-brise) et comportant au moins un dispositif d'alimentation en liquide de nettoyage, et des moyens de raccordement du dispositif d'alimentation au conduit de distribution et de projection de liquide de nettoyage.

Un dispositif d'essuyage de ce type est par exemple décrit dans la demande de brevet internationale publiée sous le numéro WO 2007/000346. Un tel dispositif d'essuyage permet l'arrosage efficace d'une surface vitrée sur laquelle se déplace le balai d'essuie-glace. Le balai d'essuie-glace étant maintenu en position et guidé en déplacement à l'aide du bras d'entraînement, c'est ce dernier qui est muni d'un dispositif d'alimentation en liquide de nettoyage provenant d'un réservoir disposé par exemple sous le capot d'un véhicule automobile. Le dispositif d'alimentation du bras d'entraînement doit donc être raccordé au conduit de distribution et de projection de liquide de nettoyage du balai d'essuie-glace. Ce raccordement spécifique pose des problèmes de branchement et de débranchement lors du montage et du démontage du balai d'essuie-glace sur le bras du dispositif d'essuyage, par exemple lorsque l'on change de balai d'essuie-glace.

Il peut ainsi être souhaité de prévoir un dispositif d'essuyage à projection de liquide de nettoyage par le balai d'essuie-glace qui permette de s'affranchir des problèmes et contraintes précités.

L'invention a donc pour objet un dispositif d'essuyage comportant un balai d'essuie-glace muni d'au moins un conduit de distribution et de projection de liquide de nettoyage par le balai d'essuie-glace, un bras d'entraînement apte à entraîner ce balai d'essuie-glace sur une vitre ou un pare-brise et comportant au moins un dispositif d'alimentation en liquide de nettoyage, et des moyens de raccordement du dispositif d'alimentation au conduit de distribution et de projection de liquide de nettoyage, **caractérisé en ce que** ces moyens de raccordement comportent des éléments de raccordement magnétique.

Ainsi, lorsque l'on monte le balai d'essuie-glace sur le bras d'entraînement, la connexion du dispositif d'alimentation en liquide de nettoyage au conduit de distribution et de projection du liquide de nettoyage peut se faire automatiquement, par simple attraction magnétique, sans aucune intervention humaine spécifique. De même, lorsque l'on retire le balai d'essuie-glace du bras d'entraînement, la déconnexion du dispositif d'alimentation en liquide de nettoyage et du conduit de distribution et de projection du liquide de nettoyage est automatique, sans nécessiter de débranchement spécifique.

De façon optionnelle, les moyens de raccordement comportent une première extrémité de raccordement du dispositif d'alimentation portée par le bras d'entraînement et une seconde extrémité de raccordement du conduit portée par le balai d'essuie-glace.

De façon optionnelle également, l'une desdites première et seconde extrémités comporte une portion aimantée et l'autre desdites première et seconde extrémités comporte une portion métallique ou aimantée, de sorte que les deux extrémités s'attirent par l'effet d'une force magnétique lorsqu'elles sont au voisinage l'une de l'autre.

De façon optionnelle également, les moyens de raccordement comportent au moins un joint d'étanchéité solidaire de l'une desdites première et seconde extrémités.

De façon optionnelle également, le joint d'étanchéité est une pièce rapportée par collage sur l'une desdites première et seconde extrémités.

De façon optionnelle également, le joint d'étanchéité est obtenu par projection d'un élastomère, notamment de type silicone, sur l'une desdites première et seconde extrémités.

De façon optionnelle également, le joint d'étanchéité est obtenu par trempage de l'une desdites première et seconde extrémités dans un élastomère liquide thermoplastique.

De façon optionnelle également, l'une desdites première et seconde extrémités est obtenue par surmoulage d'un élastomère autour de la portion métallique ou aimantée.

De façon optionnelle également, l'une desdites première et seconde extrémités, notamment la seconde extrémité portée par le balai d'essuie-glace, comporte une portion de tube souple.

De façon optionnelle également, la portion de tube souple est une portion a soufflet.

De façon optionnelle également, la première extrémité de raccordement du dispositif d'alimentation présente une surface de contact de forme tronconique et la seconde extrémité de raccordement du conduit, une surface de contact de forme tronconique complémentaire.

L'invention sera mieux comprise à l'aide de la description qui va suivre, donnée uniquement à titre d'exemple et faite en se référant aux dessins annexés dans lesquels :
- la figure 1 représente partiellement, de façon schématique et en perspective, un dispositif d'essuyage selon l'invention,
- les figures 2A et 2B représentent une vue en coupe de deux variantes d'un premier mode de réalisation de moyens de raccordement du dispositif d'essuyage de la figure 1, et
- les figures 3A et 3B représentent une vue en coupe de deux variantes d'un second mode de réalisation de moyens de raccordement du dispositif d'essuyage de la figure 1.

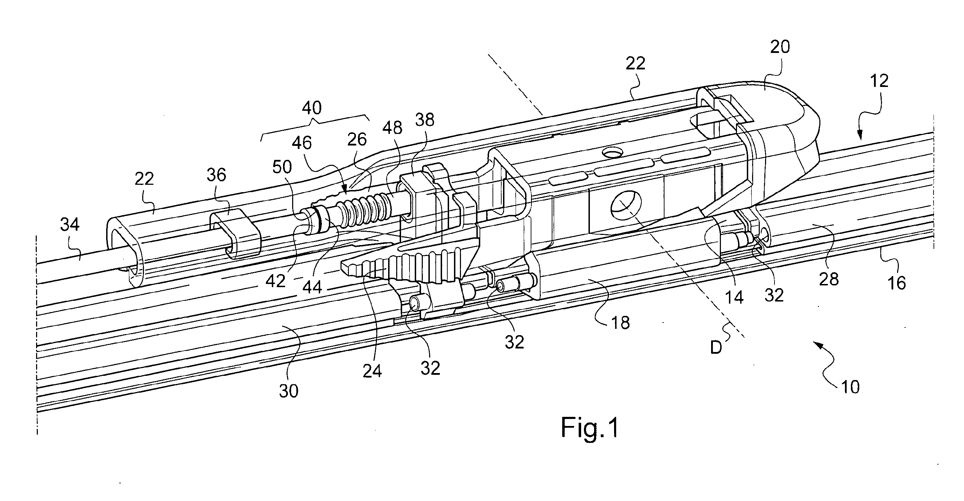

Un dispositif d'essuyage 10, représenté partiellement sur la figure 1 dans sa partie centrale, comporte un balai d'essuie-glace 12 conçu autour d'un support longitudinal 14.

Ce support longitudinal 14 porte, par exemple sur toute sa longueur, une lame en caoutchouc 16 destinée à être en contact avec une vitre ou un pare-brise de véhicule automobile.

Il porte également en son centre une première et une seconde pièce 18, 20 de fixation avec pivot d'un bras 22 de l'essuie glace 10. Le bras 22 est fixé au balai d'essuie-glace 12 de manière à entraîner ce dernier sur la vitre ou le pare-brise. Il est représenté comme s'il était transparent sur la figure 1, uniquement pour une meilleure compréhension de l'invention.

La première pièce de fixation 18 est directement montée sur le support longitudinal 14 du balai d'essuie-glace 12 et la seconde pièce de fixation 20 est montée sur la première pièce 18 à l'aide d'une liaison pivotante selon un axe D orthogonal à l'axe longitudinal du balai d'essuie-glace 12. La seconde pièce de fixation 20 comporte deux pattes latérales 24 et 26 de fixation du bras d'entraînement 22, ces deux pattes s'étendant, de part et d'autre de l'axe longitudinal du balai d'essuie-glace 12, le long de cet axe.

Le support longitudinal 14 porte également, de part et d'autre de la première pièce de fixation 18 sur la longueur du balai d'essuie-glace 12, deux pièces 28 et 30 d'habillage du support qui, par leur forme, remplissent également une fonction d'aileron ou de déflecteur (de l'anglais « spoiler ») visant à améliorer l'adhérence du balai d'essuie-glace 12 sur la vitre ou le pare-brise.

Les deux pièces d'habillage 28 et 30, ainsi que la première pièce de fixation 18, sont percées de portions de conduits latéraux disposés de chaque coté de la lame 16 lorsque le dispositif d'essuyage 10 est complètement monté. Sur la figure 1, seul un conduit latéral 32 est représenté dans la vue en perspective de le dispositif d'essuyage 10, par souci de simplification du dessin. Il s'étend sur toute la longueur du balai d'essuie-glace 12 de dispositif d'essuyage 10 en traversant les deux pièces d'habillage 28, 30 et la première pièce de fixation 18. De même, un autre conduit latéral non visible s'étend dans le balai d'essuie-glace 12 symétriquement par rapport à la lame 16.

Ces conduits latéraux 32 du balai d'essuie-glace 12 sont destinés à faire circuler et à éjecter du liquide de nettoyage par le balai d'essuie-glace à l'aide de trous (non représentés) dans les pièces d'habillage 28 et 30. Les deux conduits latéraux 32 du balai d'essuie-glace 12 sont alimentés en liquide de nettoyage par un dispositif porté par le bras 22 du dispositif d'essuyage. Ce dispositif 34 d'alimentation en liquide de nettoyage comporte par exemple, comme cela est représenté sur la figure 1, un tuyau maintenu dans un espace intérieur du bras 22 à l'aide d'une bague 36 fixée au bras 22.

Le dispositif d'essuyage 10 comporte en outre des moyens de raccordement magnétique du dispositif d'alimentation 34 aux conduits latéraux 32. Pour simplifier le raccordement, dans le mode de réalisation représenté sur la figure 1 où deux conduits latéraux 32 s'étendent dans le balai d'essuie-glace 12 de chaque côté de la lame 16, une pièce intermédiaire de raccordement 38 est aussi prévue. Elle comporte une entrée de conduit destinée à être positionnée en vis-à-vis d'une sortie du tuyau d'alimentation 34 et deux sorties de conduit destinées à former, avec les portions de conduits des deux pièces d'habillage 28, 30 et de la première pièce de fixation 18, les deux conduits latéraux 32. La jonction entre le dispositif d'alimentation 34 et les deux conduits latéraux 32 se fait donc via cette pièce intermédiaire de raccordement 38.

Plus précisément, la pièce de raccordement 38 est disposée autour du support longitudinal 14 dans l'espace disponible entre les deux pattes latérales de fixation 24 et 26 de la seconde pièce 20 de fixation du bras 22, et en interposition entre la première pièce de fixation 18 et la pièce d'habillage 30 se trouvant du côté des pattes latérales de fixation 24, 26.

Dans le mode de réalisation représenté, les moyens de raccordement magnétiques permettent le raccordement du tuyau d'alimentation 34 à l'entrée du conduit de la pièce intermédiaire de raccordement 38. Ils sont représentés par la référence générale 40 et comportent plus précisément :
- une première extrémité 42 de raccordement du tuyau d'alimentation 34,
- une seconde extrémité 44 de raccordement des conduits latéraux 32, cette seconde extrémité 44 étant l'extrémité libre d'un tuyau flexible 46 dont l'autre extrémité 48 est directement reliée à l'entrée du conduit de la pièce intermédiaire de raccordement 38, et
- au moins un joint d'étanchéité 50 solidaire de la première et/ou de la seconde extrémité 42, 44.

L'une des première et seconde extrémités 42 ou 44 comporte une portion aimantée et l'autre des première et seconde extrémités 44 ou 42 comporte une portion métallique ou aimantée, de sorte que les deux extrémités 42 et 44 s'attirent par l'effet d'une force magnétique lorsqu'elles sont au voisinage l'une de l'autre.

La présence optionnelle du joint d'étanchéité 50 entre les deux extrémités 42 et 44 permet d'éviter toute fuite de liquide de nettoyage, malgré des défauts possibles des surfaces en correspondance. Le fait que le joint soit en outre solidaire de l'une desdites première et seconde extrémités 42, 44 rend les manipulations de raccordement/séparation du balai d'essuie-glace 12 et du bras 22 bien plus aisées : en effet, le joint d'étanchéité 50 ne risque pas ainsi d'être perdu.

Les deux extrémités peuvent être munie chacune d'un joint solidaire, mais dans le cas où une seule extrémité est munie du joint solidaire, il est préférable que ce soit la seconde extrémité 44 de raccordement des conduits latéraux 32 portée par le balai d'essuie-glace 12 car celui-ci a à priori une durée de vie inférieure à celle du bras d'entraînement 22.

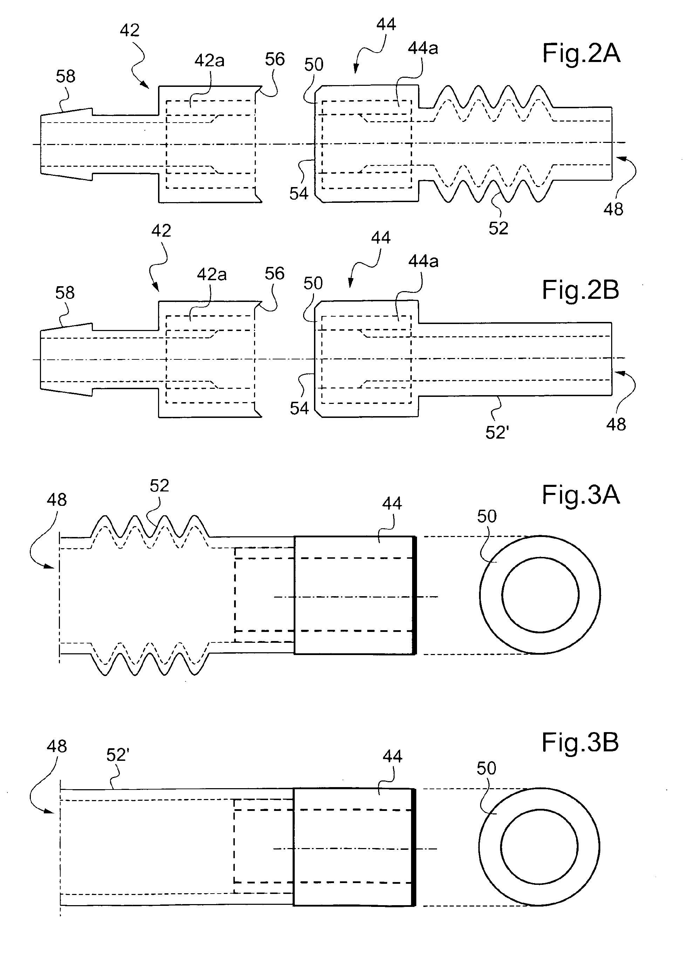

La figure 2A illustre plus précisément une première variante d'un premier mode de réalisation des moyens de raccordement magnétique 40. Dans ce premier mode de réalisation, le joint d'étanchéité 50 est formé par le surmoulage d'un matériau élastomère autour de la seconde extrémité de raccordement 44. Ce matériau élastomère est par exemple du caoutchouc.

La seconde extrémité de raccordement 44 des conduits latéraux 32 comporte en effet une portion aimantée ou métallique 44a de forme cylindrique autour de laquelle est surmoulé le tuyau flexible 46 dont l'extrémité 48 est reliée à l'entrée du conduit de la pièce intermédiaire de raccordement 38. Le joint d'étanchéité 50 est donc formé par la partie du surmoulage destinée à être présentée en vis-à-vis de la première extrémité de raccordement 42.

Dans la variante représentée sur la figure 2A, une portion médiane 52 du tuyau flexible 46, située entre la portion aimantée ou métallique 44a et l'extrémité 48, est réalisée selon un profil à soufflet. Ce profil permet d'assurer la flexibilité du tuyau 46 et permet donc de respecter une certaine liberté de mouvement relatif entre le bras d'entraînement 22 et le balai d'essuie-glace 12 lors du fonctionnement normal du dispositif d'essuyage 10.

Par ailleurs, de façon optionnelle, la partie du surmoulage destinée à être présentée en vis-à-vis de la première extrémité de raccordement 42, c'est-à-dire le joint d'étanchéité 50, présente une surface de contact « mâle » 54 de forme tronconique destinée à correspondre à une surface de contact « femelle » 56 de forme tronconique complémentaire de la première extrémité de raccordement 42. Cette complémentarité de forme des surfaces de contact 54 et 56 permet d'assurer une bonne fluidité du raccordement magnétique entre le tuyau d'alimentation 34 et les conduits 32 tout en permettant un degré de liberté supplémentaire entre les extrémités raccordées : en d'autres termes, grâce à cette complémentarité de forme, les deux extrémités 42 et 44 sont bien raccordées axialement, mais peuvent pivoter coaxialement.

La première extrémité de raccordement 42 du tuyau d'alimentation 34 comporte elle aussi une portion aimantée ou métallique 42a de forme cylindrique autour de laquelle est surmoulé une portion de tuyau dont une extrémité 58 est destinée à être reliée au tuyau d'alimentation 34 selon une conformation classique. L'autre extrémité de cette portion de tuyau comporte la surface de contact « femelle » 56 destinée à entrer en contact avec la surface « mâle » 54. Cette surface peut être partiellement libre de surmoulage, c'est-à-dire partiellement constituée d'une surface libre de la portion aimantée ou métallique 42a non recouverte de surmoulage.

On comprendra aisément qu'au moins l'une des portions aimantées ou métallique 42a et 44a doit être aimantée pour que la fonction de raccordement magnétique soit assurée, mais il n'est pas nécessaire que les deux le soient.

La figure 2B illustre une seconde variante du premier mode de réalisation décrit précédemment. Cette seconde variante diffère de la première par la portion médiane à soufflet 52 qui est remplacée par une portion médiane cylindrique souple 52'. Cette portion médiane cylindrique 52' est formée d'un matériau élastomère dont les propriétés sont choisies, de façon connue en soi, pour assurer la flexibilité souhaitée du tuyau 46.

La figure 3A illustre une première variante d'un second mode de réalisation des moyens de raccordement magnétique 40. Dans ce second mode de réalisation, le joint d'étanchéité 50 est formé par collage d'un joint annulaire sur l'une des première et seconde extrémités 42, 44. Dans l'exemple précis illustré sur cette figure, le joint d'étanchéité 50 est collé sur la seconde extrémité de raccordement 44 qui est elle même formée dans un matériau aimanté ou métallique. La première extrémité de raccordement 42 n'est pas représentée mais peut être identique à l'extrémité 44. Elle est elle même aimantée ou métallique sachant qu'au moins l'une des deux extrémités doit être aimantée. La seconde extrémité de raccordement 44 est en outre raccordée de façon classique au tuyau 46 qui est, dans ce second mode de réalisation, un élément séparé. Dans cette première variante, la partie médiane 52 du tuyau 46 est à soufflet.

La figure 3B illustre une seconde variante du second mode de réalisation décrit précédemment. Cette seconde variante diffère de la première par la portion médiane à soufflet 52 du tuyau 46 qui est remplacée par une portion médiane cylindrique souple 52', comme déjà envisagée dans la seconde variante du premier mode de réalisation.

Dans un autre mode de réalisation possible, proche du second mode de réalisation précédemment décrit et qui pourrait être illustré par les mêmes figures 3A et 3B, le joint d'étanchéité 50 pourrait être obtenu, non pas par collage d'un joint rapporté, mais par projection d'un élastomère, notamment de type silicone, sur l'une des première et seconde extrémités 42, 44. De cette façon l'épaisseur du joint peut être facilement maîtrisée et le joint d'étanchéité est solidaire de l'extrémité concernée. En outre, cela permet d'envisager de rendre étanches des extrémités de plus petites dimensions. Par exemple, si la portion cylindrique aimantée ou métallique de l'extrémité concernée a un diamètre intérieur de 4 mm et un diamètre extérieur de 6 mm, il a été expérimenté que, si en outre le matériau utilisé pour cette portion cylindrique est un alliage de néodyme, de fer et de bore avec une couche de zinc, alors l'épaisseur du joint projeté peut être comprise entre un dixième et trois dixième de millimètre avec une tolérance de variation d'épaisseur de l'ordre d'un dixième de millimètre.

Enfin, dans un autre mode de réalisation possible, proche du second mode de réalisation précédemment décrit, le joint d'étanchéité 50 pourrait être obtenu par trempage de l'une des première et seconde extrémités 42, 44 dans un élastomère liquide thermoplastique, puis par égouttage (par effet inertiel, par exemple).

Il pourrait également être obtenu par thermoformage, assemblage élastique autour de l'extrémité concernée, etc.

Il apparaît clairement que le dispositif d'essuyage décrit précédemment permet une connexion ou une déconnexion automatique du dispositif d'alimentation en liquide de nettoyage et du conduit de distribution et de projection du liquide de nettoyage, lorsque l'on monte ou démonte le bras et le balai d'essuie-glace du dispositif d'essuyage.

Il apparaît également que la présence du joint d'étanchéité solidaire d'au moins l'une des extrémités de raccordement assure une connexion étanche automatique, sans risque de perte de joint.

Enfin, la complémentarité de forme des extrémités de raccordement et la flexibilité du tuyau 46 permettent d'assurer une certaine liberté de mouvement entre le bras et le balai d'essuie-glace du dispositif d'essuyage, notamment le pivot du balai d'essuie-glace, sans pour autant nuire à la connexion étanche du dispositif d'alimentation en liquide de nettoyage et du conduit de distribution et de projection du liquide de nettoyage.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

Notamment, la présence du tuyau flexible 46 n'est pas indispensable, bien qu'avantageuse. En effet, le tuyau d'alimentation 34 pourrait être directement connecté par aimantation à l'entrée du conduit de la pièce intermédiaire de raccordement 38. Dans ce cas, l'entrée du conduit devrait âtre conçue dans un matériau aimanté ou métallique pour attirer l'extrémité de raccordement du tuyau d'alimentation. De plus, dans ce cas également, pour assurer une certaine flexibilité du raccordement, il faudrait prévoir une portion flexible du tuyau d'alimentation 34 proche de son extrémité 42.

## Revendications

1. Dispositif d'essuyage comportant un balai d'essuie-glace (12) muni d'au moins un conduit (32) de distribution et de projection de liquide de nettoyage par le balai d'essuie-glace, un bras d'entraînement (22) apte à entraîner ce balai d'essuie-glace (12) sur une surface vitrée et comportant au moins un dispositif (34) d'alimentation en liquide de nettoyage, et des moyens (38, 40) de raccordement du dispositif d'alimentation (34) au conduit (32) de distribution et de projection de liquide de nettoyage, **caractérisé en ce que** ces moyens de raccordement (38, 40) comportent des éléments (42, 44) de raccordement magnétique.

2. Dispositif d'essuyage selon la revendication 1, dans lequel les moyens de raccordement (38, 40) comportent une première extrémité de raccordement (42) du dispositif d'alimentation (34) portée par le bras d'entraînement (22) et une seconde extrémité de raccordement (44) du conduit (32) portée par le balai d'essuie-glace (12).

3. Dispositif d'essuyage selon la revendication 2, dans lequel l'une desdites première et seconde extrémités (42, 44) comporte une portion aimantée (42a, 44a) et l'autre desdites première et seconde extrémités (44, 42) comporte une portion métallique ou aimantée (44a, 42a), de sorte que les deux extrémités (42, 44) s'attirent par l'effet d'une force magnétique lorsqu'elles sont au voisinage l'une de l'autre.

4. Dispositif d'essuyage selon la revendication 2 ou 3, dans lequel les moyens de raccordement (38, 40) comportent au moins un joint d'étanchéité (50) solidaire de l'une desdites première et seconde extrémités (42, 44).

5. Dispositif d'essuyage selon la revendication 4, dans lequel le joint d'étanchéité (50) est une pièce rapportée par collage sur l'une desdites première et seconde extrémités (42, 44).

6. Dispositif d'essuyage selon la revendication 4, dans lequel le joint d'étanchéité (50) est obtenu par projection d'un élastomère, notamment de type silicone, sur l'une desdites première et seconde extrémités (42, 44).

7. Dispositif d'essuyage selon la revendication 4, dans lequel le joint d'étanchéité (50) est obtenu par trempage de l'une desdites première et seconde extrémités (42, 44) dans un élastomère liquide thermoplastique.

8. Dispositif d'essuyage selon les revendications 3 et 4, dans lequel l'une desdites première et seconde extrémités (42, 44) est obtenue par surmoulage d'un élastomère autour de la portion métallique ou aimantée (42a, 44a).

9. Dispositif d'essuyage selon l'une quelconque des revendications 2 à 8, dans lequel l'une desdites première et seconde extrémités (42, 44), notamment la seconde extrémité (44) portée par le balai d'essuie-glace (12), comporte une portion de tube souple (46).

10. Dispositif d'essuyage selon la revendication 9, dans lequel la portion de tube souple (46) est une portion a soufflet (52).

11. Dispositif d'essuyage selon l'une quelconque des revendications 2 à 10, dans lequel la première extrémité (42) de raccordement du dispositif d'alimentation (34) présente une surface de contact (56) de forme tronconique et la seconde extrémité (44) de raccordement du conduit (32), une surface de contact (54) de forme tronconique complémentaire.
